# EUROPEAN PATENT SPECIFICATION

(11) **EP 2 330 885 B1**
(45) Date of publication and mention of the grant of the patent: **04.04.2012**
(21) Application number: 09788325.0
(22) Date of filing: 18.09.2009
(51) Int. Cl.: A01G 9/22

(54) **FABRIC-SCREEN CARRIER SYSTEM**
TRÄGERSYSTEM FÜR STOFFABSCHIRMUNG
SYSTÈME DE SUPPORT D'ÉCRAN EN TISSU

(30) Priority: 19.09.2008 NL 2001999
(43) Date of publication of application: 15.06.2011
(73) Proprietor: Blok's Draadvorm Fabriek B.V., 2544 EH 's-Gravenhage (NL)
(72) Inventor: Quak, Jan Karel Benjamin, NL-2693 AD 's-Gravenzande (NL)
(74) Representative: van Westenbrugge, Andries
(86) International application number: PCT/NL2009/050560
(87) International publication number: WO 2010/033025

(56) References cited:
- FR-A- 1 379 077
- GB-A- 1 511 244
- GB-A- 2 251 777
- US-A- 4 678 019

## Description

The present invention relates to a system comprising a fabric provided on one side with a thickening and carriers attached to that one side of the fabric, said carriers comprising an accomodation for said thickening, arranged in such a manner that said fabric with said thickenings can be moved in relation to said carriers see *e.g* GB-A 1 511 244.

In various applications it is necessary to mount a fabric tightly into a frame. A particular example is a greenhouse wherein, depending on the size of the greenhouse, fabric screens of many hundreds of metres can be used that need to be mounted to two opposing carriers positioned parallel to each other. Attachment of the fabric to only one side is also conceivable. Sometimes, such fabric screens need to be movably mounted and in other cases these can be mounted in a fixed position without the need for them to be moved. The same applies to any other fabric that needs to be mounted in a frame between two carrier sections. In some cases, fabric is used in places that are not easily accessible. This applies in particular to greenhouses. Newly built greenhouses are becoming increasingly higher and when horizontal screens (but also vertical screens) are applied, these need to be mounted at ever greater heights. This means that it is no longer possible to apply a simple method for mounting the fabric screen in the desired position. Various systems have been proposed in order to simplify the mounting of the fabric screen. In one system, the fabric screen is mounted in a permanently fixed position. To achieve this, clips or carriers are applied that are positioned at regular distances from each other which, on the one hand engage, for example, beam section of greenhouse, and wherein, on the other hand, the edge of the fabric can be received. In other constructions the fabric is supported by fabric support wires positioned at regular distances from each other. These fabric supporting wires are then attached to the frame construction of a greenhouse, for example. In all these systems, as soon as work needs to be carried out at great heights after constructing a cultivating space such as a greenhouse, a separate cumbersome task is required after making the greenhouse glass-tight and installing further equipment, to mount the fabric screen separately using the respective carriers.

It is the objective of the present invention to avoid this drawback and to provide a system that can be easily mounted and which facilitates the mounting of the fabric in a movable manner.

This objective is achieved in a system according to claim 1 wherein a number of carriers are provided to said one side of the fabric, wherein the spacing between two adjacent carriers is at least 20 cm and the thickening formed in said fabric is not supported, wherein the accomodation means of each carrier is provided with an insertion opening and the carriers are embodied to be clamped into position on a carrier section.

According to the present invention, a large number of carriers are mounted at regular distances of at least 20 cm during the construction of the greenhouse or other frame construction, wherein a fabric screen can later be mounted. At this time, the fabric which is susceptible to damage is not yet present. In a following step, or directly as the carriers are mounted, the wire or cord can be inserted into the insertion opening of the carriers. This is relatively easy to achieve if performed at a later stage. Also, by drawing the wire or cord tightly, this can be inserted simultaneously into a large number of consecutively positioned carriers through the respective insertion openings. Any operation can then be carried out on the carrier section and the respective construction without the need for the fabric screen to be already in place. When the fabric screen is required, the fabric, and more specifically the thickenings thereof, can then be joined with the wire or cord and the fabric screen can be brought into the desired position by means of a simple threading operation. This threading operation entails no more than pulling the fabric screen into position by pulling the cord. Consequently, it is no longer necessary for the fabric screen to be mounted separately to each carrier section or clamp, for example at a great height. The fabric screen can be moved along a large number of carriers from one single position. As a result, this eliminates any activities that would normally need to be performed at a later stage whilst mounting the fabric screen.

A carrier section can be of any conceivable shape or form. Above all, this may also include a tightly drawn cable or tube or the like, onto which the carriers are mounted.

Because the fabric or its thickenings according to the present invention is/are only supported at several points, this will minimize friction when the fabric screen is moved. According to the present invention, the screen is supported across less than 10% of its total length, and more specifically by less than 2% or 1% of its total length. This has a resultant effect on the friction and the options for inserting the fabric at a later stage.

Above all, the present invention enables a movable fabric screen to be provided at the time of installation. A further advantage is that the fabric is not permanently held in a fixed position by clamps or carriers, but can always move (work). Moreover, it is also possible, depending on the weather conditions, to quickly exchange a fabric screen. This is achieved in that the existing fabric screen is coupled to a subsequent fabric screen so that a following fabric screen can be moved into the position of the previous fabric screen by applying said threading system.

Basically, the position of the fabric screen is not important. This means that the present invention relates to both horizontal and vertical screens and screens at any inclined position. Above all, the screen can be applied both inside a (cultivating) space and on the exterior thereof.

If desired, it is also possible to mechanize the displacement of the wire or cord by means of a motor.

Moreover, the fabric and more specifically the previously described guidance system used in conjunction therewith, comprising the two arrays of carriers positioned opposite each other, can be mounted on the exterior of a cultivating space such as a greenhouse. In the event of damage to the greenhouse roof, it is possible to insert a clear film/fabric so that the opening thus created can be (substantially) closed off and thus minimize the effects of the opening on the indoor climate of the greenhouse. Moreover, instead of a transparent film, a translucent film such as an insect-repellent mesh screen can be used to form a barrier to stop insects entering the interior of the cultivating space during ventilation. Of course, in such cases, there should be no conflicting situation between ventilating (opening a window) and any mesh screen to be mounted. The screen can also be used for exterior cultivations, such as fruit groves. Any desired position of the screen is also conceivable in such cases.

When positioned vertically, the fabric screen can be used to create compartments within a much larger space (also outside, in the open air). Moreover, it is also possible to apply the tubes of scaffolding constructions and the like to serve as carrier sections and for screen to be quickly mounted thereto, for example, when placing temporary work partitions and the like. Depending on the application, the previously described motor will be used.

The carriers are preferably embodied in such a manner that these engage the respective carrier section by clamping. In a particular embodiment of the invention, the carrier comprises wire material. This wire material, and more specifically, resilient wire material such as steel wire, can be arranged using two resiliently two spaced legs which can resiliently move toward each other embodied to be positioned on opposing sides of a carrier section. These legs are then connected by a moulded section that forms both the insertion opening and the accomodation. It should be understood that any other conceivable construction can be applied instead of a wire member. Examples may include a section of extruded material, injection-moulded products, products that are manufactured by the transformation of thin-walled plate material and the like.

The invention also relates to a method according to claim 10 for mounting and removal of a fabric screen in or from a certain position, comprising the provision of two substantially parallel carrier sections for receiving said fabric screen between said sections, the provision of a series of carriers to each of said carrier sections, wherein the distance between said carriers comprises at least 20 cm, wherein said carriers comprise an accomodation for a thickening with an insertion opening on the side facing the other carrier section, the insertion through said insertion openings of a wire along a series of carriers, an end of said wire being connected to thickenings formed on both sides of a screen and the threaded insertion of said thickenings by pulling the other end of said wire through said receiving means of said carriers, thus resulting in the mounting of a screen.

The invention will now be described in more detail below with reference to exemplary embodiments shown in the drawing, in which:
Fig. 1 shows a greenhouse equipped with a fabric screen and carriers;
Fig. 2 shows a carrier and carrier section;
Fig. 3 shows the threaded insertion of the fabric screen after installing the carriers to the carrier section;
Fig. 4 shows a detail of the construction shown in fig. 3; and
Fig. 5a-e show a series of alternative embodiments of the carrier applied either in conjunction with a profile section or otherwise.

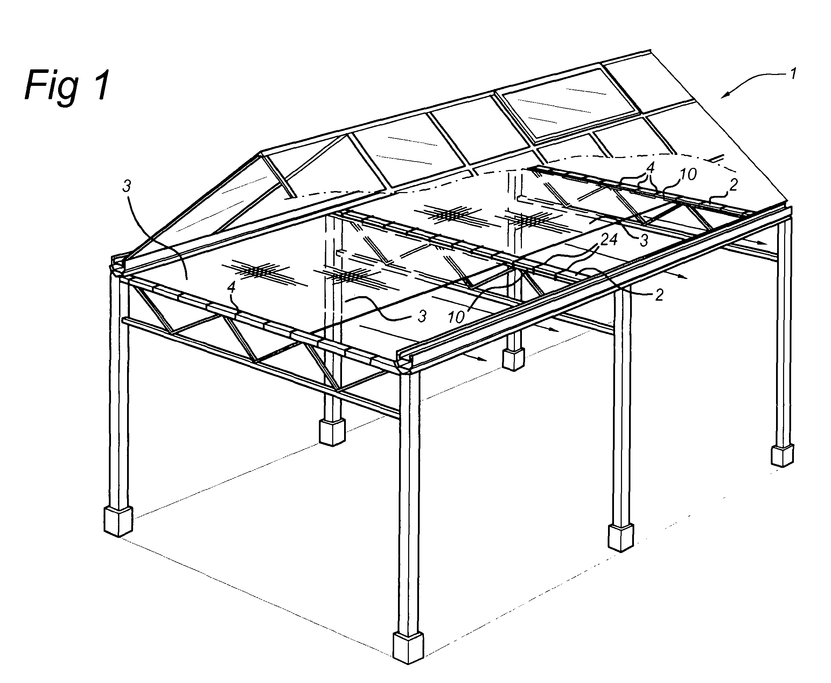

In fig. 1 a greenhouse is indicated by the numeral 1. (Longitudinal) Beams 2 are present therein, which are positioned substantially opposite each other and can have a length of up to several hundred metres. A fabric screen 3 is to be mounted between said beams. The greenhouse may have a considerable height (for example 5 metres or more) and it is not possible to arrange the fabric screen in a simple yet safe manner.

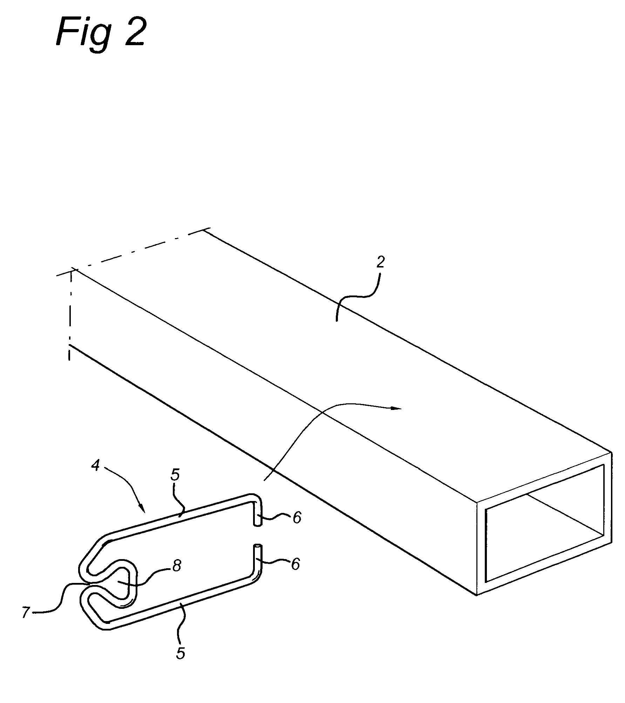

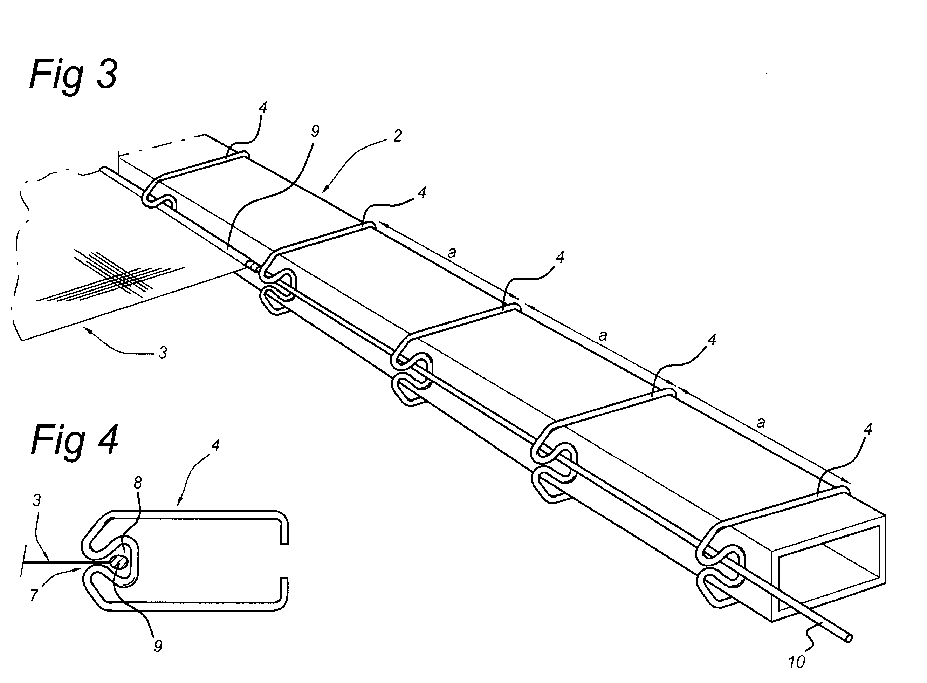

To solve this problem, according to the present invention, a system is provided comprising an array of clamps 4, 24 and a fabric screen. Fig. 2 shows the longitudinal beam section and adjacent thereto an example of a carrier or clamp 4. In this case, the carrier or clamp 4 is formed by a wire product and comprises two legs 5 positioned opposite each other with bended over free end sections 6. The legs 5 are connected via an insertion opening 7 and receiving means 8. Due to the material applied, this clamp is resilient and can be mounted to the longitudinal beam 2 as shown in figure 3. Here, the horizontal position is formed by a butting of the connecting ends of the legs 5 into position at the receiving means 8 and the bended over opposing end sections 6.

According to the present invention, a large number of such clamps or carriers 4 are mounted when a greenhouse (or any other construction) is erected. The individual spacing amounts to tens of centimeters and more specifically more than 20 cm. This distance is indicated in fig. 3 by an accomodation. A cord or wire 10 is inserted into the insertion openings 7 or by means of threaded insertion through the receiving means 8 at the same time as the clamps 4 are mounted. Such a cord does not occupy any space, nor does it interfere in any way. If it is decided to mount the fabric screen at a later stage, this can then be performed quite easily Cord 10 is connected at the free end thereof to a thickening 9 on both sides of the fabric screen 3 (see fig. 4). The fabric screen can then be easily moved by applying a traction force to the cord 10 (by means of a motor or otherwise). It will be understood that the traction force to the cord can be applied from any desired position and that it is no longer necessary to pass along all individual carriers 4 in order to thread the fabric screen into position. A fabric screen can be installed quite easily in this manner. If another fabric screen is to be installed, then another fabric screen can be connected by means of the thickening 9 of the fabric screen 3 as shown in fig. 3. It is also possible to mount a further cord 10 in between. It is also possible to move the fabric screen shown in fig. 3 into a different position or to move it back to its original position. This can be controlled, on the one hand, by exerting a traction force on the cord 10, and on the other hand, on the end of the thickening 9 that is not connected with cord 10.

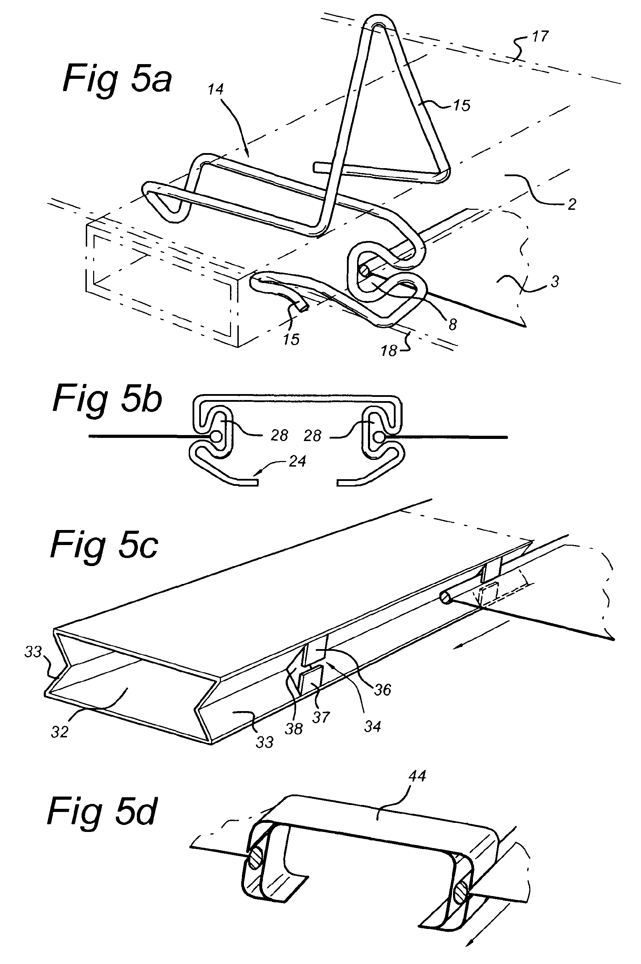

It will be understood that the construction shown in figs. 1 and 3 can be applied vertically or inclined at an angle, both inside and outside any conceivable building structure. Depending on the prevailing conditions, a fabric screen can be chosen that is adapted to suit those conditions. Particularly in the horticultural industry, various kinds of screens can be applied to control the light yield and the type of light required. In other words, the choice of suitable screens can be based upon the amount of light required, thus enabling specific parts of the light spectrum to be filtered or to be reflected. The quick and simple exchange of the type of screen inserted enables one to adapt immediately to varying weather conditions. If large surface areas are to be spanned by the fabric screen 3, it is possible to mount separate support wires 18 to enable the fabric screen to be supported on such support wires in a horizontal position. The clamps (fig. 5a) described hereinafter can also be applied in the construction according to fig. 3.

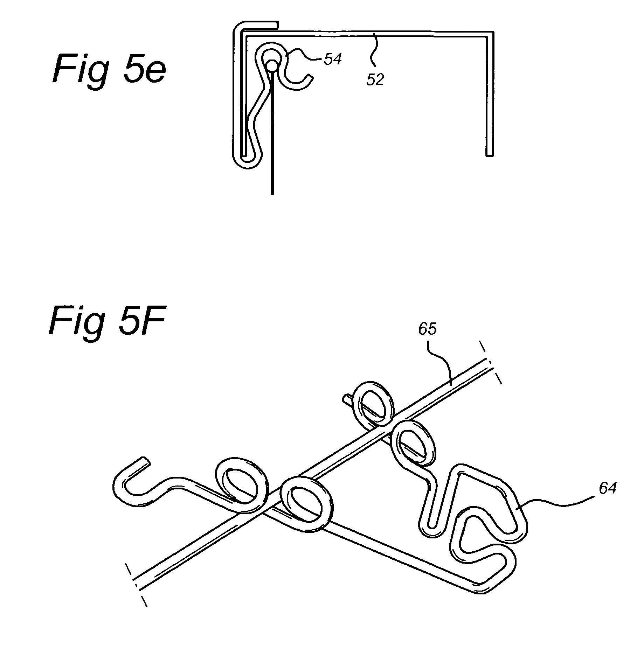

Fig. 5 shows several examples of the large number of alternative embodiments that are conceivable in the application of the present invention. In fig. 5a, a clamp or carrier is indicated by numeral 14, wherein the legs 15 have a specific embodiment in order to incorporate a further wire, such as a mounting wire 17 and the support wire 18. Fig. 5b indicates a double-sided carrier. This can be clamped to a centrally positioned beam, thus providing options on both sides for mounting a fabric screen, wherein the bead or thickening of a fabric screen can be inserted into a receiving means 28 in a clamp 24 shown in fig. 5b. ,

Fig. 5c shows an alternative embodiment but not according to the invention, wherein the clamp is indicated by numeral 34. In this example, this operates on both sides. The respective specific section 32 is provided with a grooved boundary 33 to which clamp 34 can be easily applied. This comprises two clamping members 36 and 37 positioned opposite each other and which can be mounted onto section 32 independently of each other. The groove 33 automatically results in the receiving means 38 for receiving the thick seam or ridge of the fabric.

Fig. 5d shows an exemplary embodiment of a clamp comprising pressed plate material or a clamp moulded from a plastic. This is indicated in its entirety by the numeral 44.

Fig. 5e shows an alternative embodiment of a clamp 54 which can be applied in conjunction with a U-section 52. It goes without saying that such a clamp 54 can be mounted on both sides of this U-section 52.

Finally, fig. 5f shows an alternative embodiment, wherein a clamp 64 is embodied to clamp a wire or rod into position.

After reading the above, persons skilled in the prior art will be readily aware of alternative embodiments of the invention which lie within the scope of the appended claims.

## Claims

1. System comprising a fabric screen (3) provided on one side with a thickening (9) and carriers (4) arranged to said one side of the fabric, said carriers comprising an accomodation (8) for said thickening , arranged in such a manner that said fabric with said thickenings can be moved in relation to said carriers, wherein the accomodation (8) of each carrier is provided with an insertion opening (7), **characterised in that** a number of carriers (4) is attached to said one side of said fabric, wherein the distance (a) between two adjacent carriers is at least 20 cm and the thickening of said fabric is not supported in said spacing and said carriers are embodied to be clamped into position on a carrier section (2).

2. System according to claim 1, wherein said thickenings at the free end of said fabric are continued as wire (10) for moving said fabric.

3. System according to any of the preceding claims, wherein said fabric comprises a screen.

4. System according to any of the preceding claims, wherein said fabric is mounted in a substantially horizontal position.

5. System according to any of the preceding claims, wherein said fabric is mounted in a substantially vertical position.

6. System according to any of the preceding claims, wherein said carrier (4) comprises two spaced legs (5) being resiliently driven to each other, embodied to lie against two opposing sides of said carrier section.

7. System according to claim 6, wherein the legs (5) of the carrier are attached by means of said receiving means (8) and end freely on the other side (6).

8. System according to claim 6 or 7, wherein the carrier (4) comprises wire material.

9. Cultivating space (1) comprising a system according to any of the preceding claims.

10. Method for the provision or removal of a fabric (3) in or from a certain position, comprising the provision of two substantially parallel carrier sections (2) for receiving said fabric screen between said sections, the mounting of a series of carriers (4) to each of said carrier sections, wherein the distance (a) between said carriers comprises at least 20 cm, wherein said carriers comprise an accomodation (8) for a thickening with insertion opening (7) on the side facing the other carrier section, the insertion through said insertion openings of a series of wire (10) carriers, an end of said wire being connected to thickenings formed on both sides of a screen and the threaded insertion of said thickenings by pulling the other end of said wire (10) through said accomodations (8) of said carriers (4), thus resulting in the mounting of a screen.

11. Method according to claim 10, wherein the provision of said carriers comprises the clamping thereof on said carrier sections.

## Patentansprüche

1. System, umfassend eine Stoffabschirmung (3), die an einer Seite mit einer Verdickung (9) versehen ist, und Träger (4), die an der einen Seite des Stoffes angeordnet sind, wobei die Träger eine Unterbringung (8) für die Verdickung umfassen, mit einer Anordnung derart, dass der Stoff mit den Verdickungen relativ zu den Trägern bewegt werden kann, wobei die Unterbringung (8) eines jeden Trägers mit einer Einführöffnung (7) versehen ist, **dadurch gekennzeichnet, dass** eine Anzahl von Trägern (4) an der einen Seite des Stoffes angebracht ist, wobei der Abstand (a) zwischen zwei benachbarten Trägern wenigstens 20 cm beträgt und die Verdickung des Stoffes in der Beabstandung nicht unterstützt wird und die Träger derart ausgeführt sind, dass sie an einem Trägerabschnitt (2) in Position geklemmt werden.

2. System nach Anspruch 1, wobei die Verdickungen an dem freien Ende des Stoffes als Draht (10) zum Bewegen des Stoffes fortgesetzt sind.

3. System nach einem der vorhergehenden Ansprüche, wobei der Stoff eine Abschirmung umfasst.

4. System nach einem der vorhergehenden Ansprüche, wobei der Stoff in einer im Wesentlichen horizontalen Position montiert ist.

5. System nach einem der vorhergehenden Ansprüche, wobei der Stoff in einer im Wesentlichen vertikalen Position montiert ist.

6. System nach einem der vorhergehenden Ansprüche, wobei der Träger (4) zwei elastisch zueinander getriebene, beabstandete Beine (5) umfasst, die derart ausgeführt sind, dass sie gegen zwei entgegengesetzte bzw. gegenüberliegende Seiten des Trägerabschnittes liegen.

7. System nach Anspruch 6, wobei die Beine (5) des Trägers mittels der Aufnahmemittel (8) angebracht sind und an der anderen Seite (6) frei enden.

8. System nach Anspruch 6 oder 7, wobei der Träger (4) Drahtmaterial umfasst.

9. Anbauraum (1), umfassend ein System nach einem der vorhergehenden Ansprüche.

10. Verfahren zum Bereitstellen oder Entfernen eines Stoffes (3) in einer bestimmten Position bzw. aus dieser, umfassend das Bereitstellen von zwei im Wesentlichen parallelen Trägerabschnitten (2) zum Aufnehmen der Stoffabschirmung zwischen den Abschnitten, das Montieren einer Reihe von Trägern (4) an jedem der Trägerabschnitte, wobei der Abstand (a) zwischen den Trägern wenigstens 20 cm umfasst, wobei die Träger eine Unterbringung (8) für eine Verdickung mit der Einführöffnung (7) an derjenigen Seite, die zu dem anderen Trägerabschnitt weist, umfassen, das durch die Einführöffnungen erfolgende Einführen einer Reihe von Trägern aus Draht (10), wobei ein Ende des Drahtes mit Verdickungen verbunden ist, die an beiden Seiten einer Abschirmung ausgebildet sind, und das Einziehen der Verdickungen durch Ziehen des anderen Endes des Drahtes (10) durch die Unterbringungen (8) der Träger (4), was in der Montage der Abschirmung resultiert.

11. Verfahren nach Anspruch 10, wobei das Bereitstellen der Träger das Anklemmen derselben an den Trägerabschnitten umfasst.

## Revendications

1. Système comprenant un écran de tissu (3) prévu sur un côté avec un épaississement (9) et des supports (4) agencés sur ledit un côté du tissu, lesdits supports comprenant un logement (8) pour ledit épaississement, agencé de sorte que ledit tissu avec lesdits épaississements peut être déplacé par rapport auxdits supports, dans lequel le logement (8) de chaque support est prévu avec une ouverture d'insertion (7), **caractérisé en ce qu'**un certain nombre de supports (4) sont fixés sur ledit un côté dudit tissu, dans lequel la distance (a) entre deux supports adjacents est d'au moins 20 cm et l'épaississement dudit tissu n'est pas supporté dans ledit espacement et lesdits supports sont mis en oeuvre pour être bloqués par serrage en position sur une section de support (2).

2. Système selon la revendication 1, dans lequel lesdits épaississements au niveau de l'extrémité libre dudit tissu sont continus comme un fil (10) pour déplacer ledit tissu.

3. Système selon l'une quelconque des revendications précédentes, dans lequel ledit tissu comprend un écran.

4. Système selon l'une quelconque des revendications précédentes, dans lequel ledit tissu est monté dans une position sensiblement horizontale.

5. Système selon l'une quelconque des revendications précédentes, dans lequel ledit tissu est monté dans une position sensiblement verticale.

6. Système selon l'une quelconque des revendications précédentes, dans lequel ledit support (4) comprend deux pattes (5) espacées qui sont entraînées de manière élastique l'une par rapport à l'autre, mises en oeuvre pour se trouver contre deux côtés opposés de ladite section de support.

7. Système selon la revendication 6, dans lequel les pattes (5) du support sont fixées au moyen desdits moyens de réception (8) et se terminent librement de l'autre côté (6).

8. Système selon la revendication 6 ou 7, dans lequel le support (4) comprend un matériau de fil.

9. Espace de culture (1) comprenant un système selon l'une quelconque des revendications précédentes.

10. Procédé pour fournir ou retirer un tissu (3) dans ou d'une certaine position, comprenant les étapes consistant à prévoir deux sections de support (2) sensiblement parallèles pour recevoir ledit écran de tissu entre lesdites sections, monter une série de supports (4) sur chacune desdites sections de support, dans lequel la distance (a) entre lesdits supports comprend au moins 20 cm, dans lequel lesdits supports comprennent un logement (8) pour un épaississement avec l'ouverture d'insertion (7) sur le côté faisant face à l'autre section de support, insérer à travers lesdites ouvertures d'insertion une série de supports de fil (10), une extrémité dudit fil étant raccordée aux épaississements formés des deux côtés d'un écran, et insérer par enfilage lesdits épaississements en tirant l'autre extrémité dudit fil (10) à travers lesdits logements (8) desdits supports (4), ce qui se traduit par le montage d'un écran.

11. Procédé selon la revendication 10, dans lequel l'étape consistant à prévoir lesdits supports comprend l'étape consistant à les serrer sur lesdites sections de support.
